# EUROPEAN PATENT APPLICATION

(11) **EP 3 511 153 A1**
(43) Date of publication of application: **17.07.2019**
(21) Application number: 17849160.1
(22) Date of filing: 11.09.2017
(51) Int. Cl.: B29C 70/22, B29C 70/08, B29C 70/54, C08J 5/04

(54) **POROUS FIBER REINFORCED COMPOSITE MATERIAL AND METHOD FOR PREPARING SAME**

(30) Priority: 12.09.2016 KR 20160117550
(71) Applicant: LG Hausys, Ltd., Seoul 07326 (KR)
(72) Inventor: HAN, Kyung-Seok, Anyang-si Gyeonggi-do 14120 (KR); AHN, Seung-Hyun, Anyang-si Gyeonggi-do 14044 (KR); JUNG, Seong-Moon, Daejeon 34118 (KR)
(74) Representative: Zacco Sweden AB
(86) International application number: PCT/KR2017/009957
(87) International publication number: WO 2018/048276

(57) **Abstract**

The present invention provides a porous fiber reinforced composite material comprising: a first fibrous particle; a second fibrous particle; and a binders for binding the first fibrous particle to the second fibrous particle, wherein the first fibrous particle and the second fibrous particle are bound by the binders to form an irregular mesh structure including pores, the first fibrous particle is an inorganic fiber or an organic fiber, the second fibrous particle comprises a first thermoplastic resin, the binders comprises a second thermoplastic resin, and the melting point of the first thermoplastic resin is higher than that of the second thermoplastic resin, wherein the second thermoplastic resin is a crystalline thermoplastic resin.

## Description

### [TECHNICAL FIELD]

The present disclosure relates to a porous fiber-reinforced composite.

### [BACKGROUND]

A conventional thermoplastic composite is composed of reinforcing fibers such as glass fibers or carbon fibers exhibiting high rigidity and a thermoplastic resin constituting a matrix. The thermoplastic composite exhibits higher mechanical properties than conventional thermoplastic resins, and thus are widely used in automotive and construction materials. In a conventional method of producing a thermoplastic composite, the reinforcing fibers is mixed with the thermoplastic resin and then the mixture is shaped via an extrusion or a mold pressing process. Recently, in order to improve strength and productivity of the composite, a dry needle punching process or a hydroentanglement process is employed in which a mat containing reinforcing fibers is produced and then the mat is impregnated with a resin to produce the composite.

The composite between the reinforcing fibers and thermoplastic resin exhibits excellent mechanical strength as compared with only the thermoplastic resin because the reinforcing fibers acts as a reinforcing material. An approach for increasing the strength of the fiber-reinforced composite may include an approach for increasing a rigidity of the reinforcing fibers itself or increasing a content of the reinforcing fibers, or an approach for improving a binding strength between the reinforcing fibers and the thermoplastic resin. However, when a wet or dry process for producing a fiber reinforced mat is introduced, there is a limitation in strength improvement via reinforcing fibers modification. Thus, instead of the modification of powders or short fibers, the thermoplastic resin may be modified to be optimized for the production process. Further, ordinary thermoplastic resins are chemically hydrophobic or have a specific gravity lower than water, dispersibility thereof is remarkably decreased during a mat forming process. Thus, the fibrous thermoplastic resin may not be applied to the hydroentanglement process. Further, since the thermoplastic resin is entirely melted after forming and then forms a matrix to tie the reinforcing fibers each other, the thermoplastic resin does not greatly affect the strength improvement.

### [DISCLOSURE]

### [TECHNICAL PURPOSE]

One implementation of the present disclosure provides a porous fiber-reinforced composite capable of achieving a mechanical strength and low weight.

### [TECHNICAL SOLUTION]

In one implementation of the present disclosure, a porous fiber-reinforced composite may include first fibrous particles; second fibrous particles; and binders for binding the first fibrous particles and the second fibrous particles to each other, wherein the first fibrous particles and the second fibrous particles bind to each other via the binders to form an irregular mesh structure containing pores therein, wherein the first fibrous particles include inorganic or organic fibers, wherein the second fibrous particles include a first thermoplastic resin, wherein the binders includes a second thermoplastic resin, wherein a melting point of the first thermoplastic resin is higher than a melting point of the second thermoplastic resin, wherein the second thermoplastic resin includes a crystalline thermoplastic resin.

The binder may be partially or entirely coated on a surface of each of the first fibrous particles and the second fibrous particles to form coating, wherein the coatings formed on the surfaces of the first fibrous particles and the second fibrous particles may be fused and bound to each other.

When a melting point of the second thermoplastic resin at which the second thermoplastic resin is melt at a maximum level is defined as a melting pointₘₐₓ, the second thermoplastic resin may include a low melting point PET fiber with a melting pointₘₐₓ in a range of about 150 to about 170°C.

The second thermoplastic resin may have a melting point range within ± 20°C around the melting pointₘₐₓ.

The second thermoplastic resin may include an elongated polyester fiber having an elongation in a range of 20% to 80%.

### [TECHNICAL EFFECT]

The porous fiber-reinforced composite has a low density, excellent sound absorption performance, and formability while exhibiting a high mechanical strength such as high tensile, flexural and impact strengths.

### [BRIEF DESCRIPTION OF DRAWINGS]

FIG. 1 is a schematic diagram of a porous fiber-reinforced composite according to one implementation of the present disclosure.
FIG. 2 illustrates a production of a porous fiber-reinforced composite according to another implementation of the present disclosure by applying heat and pressure to reinforcing fibers and bicomponent polymer according to a production method of the porous fiber-reinforced composite.
FIG. 3 is a schematic representation of a production method of a porous fiber-reinforced composite in accordance with another implementation of the present disclosure.
FIG. 4 is a SEM photograph of a cut surface of a plate produced in accordance with Present Example 1.
FIG. 5 is a SEM photograph of a cut surface of a plate produced in accordance with Comparative Example 1.

### [DETAILED DESCRIPTIONS]

Hereinafter, implementations of the present disclosure will be described in detail. It should be understood, however, that the present disclosure is not limited thereto and that the present disclosure is only defined by a scope of following claims.

In one implementation of the present disclosure, there is provided a porous fiber-reinforced composite comprising: first fibrous particles; second fibrous particles; and binders for binding the first fibrous particles and the second fibrous particles to each other, wherein the first fibrous particles and the second fibrous particles bind to each other via the binders to form an irregular mesh structure containing pores therein, wherein the first fibrous particles include inorganic or organic fibers, wherein the second fibrous particles include a first thermoplastic resin, wherein the binders includes a second thermoplastic resin, wherein a melting point of the first thermoplastic resin is higher than a melting point of the second thermoplastic resin, wherein the second thermoplastic resin includes a crystalline thermoplastic resin.

Surfaces of the first fibrous particles and the second fibrous particles are partially or wholly coated by the binder component. That is, a coating made of the binder may be partially or entirely formed on each surface of the first fibrous particles and the second fibrous particles.

The coatings on the first fibrous particles and the second fibrous particles are welded to each other such that the first fibrous particles and the second fibrous particles bind to each other irregularly. In this way, the first fibrous particles and the second fibrous particles thus bound to each other may form an irregular mesh structure containing the pores therein.

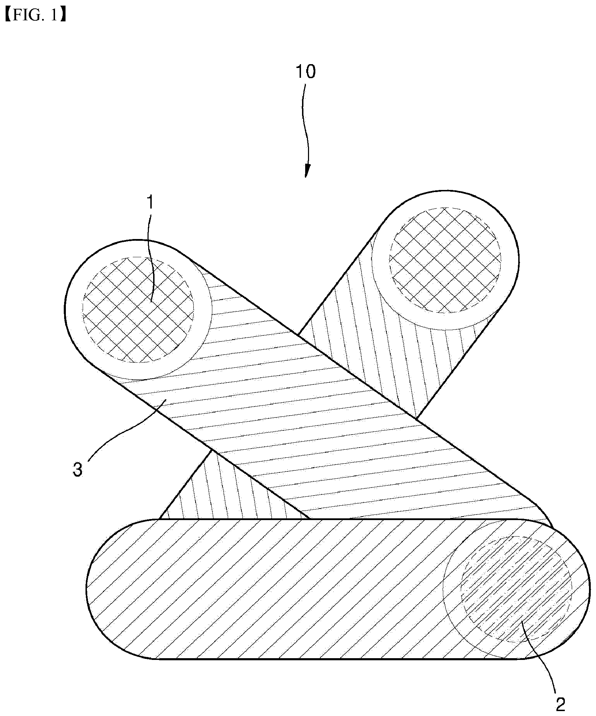

FIG. 1 is a schematic diagram of a porous fiber-reinforced composite 10 including first fibrous particles 1, second fibrous particles 2 and binders 3 according to one implementation of the present disclosure.

The porous fiber-reinforced composite may achieve high mechanical strengths, such as tensile, flexural and impact strengths, while achieving low density and thus low weight. Thus, the porous fiber-reinforced composite may be usefully applied to automotive and building materials requiring these properties. In addition, the porous fiber-reinforced composite may meet the sound absorption performance requirement to such automotive and building materials, and have excellent formability.

The porous fiber-reinforced composite may be produced according to a method of producing the porous fiber-reinforced composite as described below. In the method for producing the porous fiber-reinforced composite, the first fibrous particles and second fibrous particles may be well dispersed in the resin.

When, in this way, the first fibrous particles and second fibrous particles are well dispersed in the resin, the bond strength between the fibers and the resin increases, thereby improving the strength of the porous fiber-reinforced composite.

The production of the porous fiber-reinforced composite is based on the correlation between the dispersion and strength thereof That is, improvement of the dispersibility of the first fibrous particles and second fibrous particles may lead to the improvement of the strength of the composite.

When the fibrous particles are well dispersed, a thickness variation of a sheet made of the porous fiber-reinforced composite becomes low. The better the dispersibility of the fibrous particles, the less the aggregation of fibrous particles. Conversely, when the fibrous particles are dispersed poorly, the fibrous particles become aggregated well. When the fibrous particles are aggregated, a thickness of the sheet in a region corresponding to the aggregation of fibrous particles is increased. Therefore, the sheet made of the porous fiber-reinforced composite with excellent dispersibility of the fibrous particles has an uniform thickness. In other words, the thickness variation in the sheet made of the porous fiber-reinforced composite which has good dispersibility of the fibrous particles becomes low.

In one implementation, the porous fiber-reinforced composite is shaped into a sheet. A thickness variation in the sheet may be smaller than about or equal to 2 mm.

In other implementations, the porous fiber-reinforced composite is sheet-like. The thickness variation in the sheet may be about 0.3 mm or smaller.

The 'thickness deviation in sheet' means a difference between a maximum thickness and a minimum thickness in a single sheet.

One approach to confirm that the dispersibility of the fibrous particles contained in the porous fiber-reinforced composite is improved may involve evaluating a cross-section of the porous fiber-reinforced composite using a color difference meter. The better the dispersibility of the fibrous particles, the smaller the aggregation, resulting in a broad white color. On the other hand, when the fibrous particles are dispersed poorly, the fibrous particles will aggregate and overlap with each other, resulting in a local dark color. This color difference may be evaluated using a colorimeter.

Another approach to confirm that the dispersibility of the fibrous particles contained in the porous fiber-reinforced composite is improved may include comparing strengths of the porous fiber-reinforced composites. As the dispersibility of the fibrous particles improves, this results in an improvement in the strength of the porous fiber-reinforced composite. Therefore, conditions such as contents and types of the binders, the first fibrous particles, the second fibrous particles contained in the porous fiber-reinforced composite are constant while only the dispersibility of the first fibrous particles and the second fibrous particles may vary between various production examples of the composites. Then, the strengths of various composites as produced by the various production examples may be compared to each other.

The porous fiber-reinforced composite has excellent dispersibility of the first fibrous particles and the second fibrous particles. Thus, the porous fiber-reinforced composite may achieve high mechanical strengths, such as tensile, flexural and impact strengths, while achieving low density and thus low weight.

The porous fiber-reinforced composite may be formed into a sheet in which the first fibrous particles and second fibrous particles have an unidirectional orientation. When, as described above, the sheet of the porous fiber-reinforced composite has the unidirectional orientation, the sheet has a high mechanical property along the direction of the orientation. Such a sheet is suitable for application as a material which can withstand a large force in a specific direction.

The porous fiber-reinforced composite contains two types of reinforcing fibers: first fibrous particles and second fibrous particles. The porous fiber-reinforced composite may be configured to exhibit excellent predetermined characteristics via controlling the types and contents of first fibrous particles and second fibrous particles.

The first fibrous particles may employ a material with high tensile modulus such as glass fibers. At the same time, the second fibrous particles may employ thermoplastic fibers produced from thermoplastic resin. This configuration may further enhance the strength of the composite and at the same time may realize the elasticity of the thermoplastic resin in the composite. The thermoplastic resin constituting the second fibrous particles employs the thermoplastic resin having a relatively high melting point. This configuration may realize an additional strength improvement compared to a case in which only first fibrous particles are present. In addition, since the thermoplastic fiber has excellent elasticity in comparison with the first fibrous particles, the thermoplastic fiber may effectively dampen the impact energy from the outside.

Further, the second thermoplastic resin contained in the binders may be a crystalline thermoplastic resin, and the melting point thereof is relatively low. Thus, the porous fiber-reinforced composite has low temperature formability.

In one embodiment, a weight ratio between a content of first fibrous particles and a sum of the contents of the second fibrous particles and binders in the porous fiber-reinforced composite is in a range of from about 20:80 to about 80:20, specifically, is in range of from about 40:60 to about 60:40. The higher the content of the first fibrous particles, the better the strength of the composite. However, when the content of the first fibrous particles is higher than a certain level, the strength may be constant. In the above-defined content (weight ratio) range, the effect expected from the second fibrous particles may be obtained while ensuring strength enhancement in accordance with the increasing content of the first fibrous particles.

The second fibrous particles and binders may originate from the bicomponent polymer fibers, according to the production method of the porous fiber-reinforced composite as described below. Therefore, the production method of the porous fiber-reinforced composite as described below may produce a porous fiber-reinforced composite having the above defined content range via controlling the contents of the first fibrous particles and bicomponent polymer fibers.

In other implementations, the porous fiber-reinforced composite may contain from about 40 parts by weight to about 250 parts by weight of the binders relative to 100 parts by weight of the second fibrous particles. This defined weight ratio range of the second fibrous particles and binders may maintain a good dispersibility while appropriately imparting the binding force and elasticity to the composite.

In the production method of the porous fiber-reinforced composite as described later, the above defined weight ratio between the second fibrous particles and the binders may be realized via controlling a weight ratio between a core and sheath of the bicomponent polymer fibers as described above.

The first fibrous particles may include at least one selected from a group consisting of glass fibers, aramid fibers, carbon fibers, carbon nanotubes, boron fibers, metal fibers, and combinations thereof. Examples of the metal fibers may include nickel fibers, iron fibers, stainless steel fibers, copper fibers, aluminum fibers, silver fibers and gold fibers.

Specifically, each of the first fibrous particles may have a cross-sectional diameter in a range of from about 5 microns to about 40 microns. The first fibrous particles having the above defined diameter range may impart an appropriate strengthen to the composite while maintaining the orientation and dispersibility. The porous fiber-reinforced composite containing the first fibrous particles of the above defined diameter range may be resistant to external impacts. According to the production method of the porous fiber-reinforced composite to be described later, when the first fibrous particles having the above defined diameter range are dispersed in an aqueous solution to have the hydroentanglement property in the aqueous solution during the production, this may facilitate the production of the sheet made of the porous fiber-reinforced composite.

Each of the first fibrous particles may be in a range of about 1 mm to about 50 mm in length. The first fibrous particles with the length in the above range may appropriately impart strength to the composite while maintaining the orientation and dispersibility. Further, the first fibrous particles with the length in the above range may realize a proper bonding force between the fibrous particles to allow the porous fiber-reinforced composite to have an excellent strength. Further, the first fibrous particles with the length in the above range may prevent the aggregation of the fibers and thus the deterioration in the dispersibility. The first fibrous particles with the length in the above range may facilitate the production of the sheet made of the porous fiber-reinforced composite.

Specifically, the melting point of the first thermoplastic resin may be equal to or greater than about 160°C. More specifically, the melting point of the first thermoplastic resin may be in a range of from about 200°C to about 400°C. The first thermoplastic resin having the melting point in the above defined range may maintain the fibrous state after the binder melts during a low temperature forming. When the melting point of the first thermoplastic resin is lower than 160°C, the thermoforming temperature should be too low in order to keep the first thermoplastic resin fibrous. Otherwise, the porous fiber-reinforced composite containing the first thermoplastic resin may be deteriorated in terms of thermal stability, to cause dimensional deformation or polymer deterioration. Further, the temperature difference between the first and second thermoplastic resins may be too small to control the forming temperature.

For example, the first thermoplastic resin may be polyethylene terephthalate.

In other implementations, the specific gravity of the first thermoplastic resin is greater than about 1. According to the production method of the porous fiber-reinforced composite as described below, the bicomponent polymer fibers are dispersed in the aqueous acid solution. In this connection, a material with a specific gravity higher than 1, which is the specific gravity of water should be employed to improve the dispersibility and facilitate the formation of the network structure. Therefore, the core of the bicomponent polymer fiber may include a thermoplastic resin with a specific gravity higher than 1, such as polyester.

The first thermoplastic resin which may form the second fibrous particles may include at least one selected, for example, from a group consisting of polyester, polypropylene (PP), polyethylene (PE), acrylic butadiene styrene (ABS), polycarbonate (PC), nylon, polyvinyl chloride (PVC), polystyrene (PS), polyurethane (PU), polymethylmethacrylate (PMMA), polylactic acid (PLA), Teflon (polytetrafluoroethylene), and combinations thereof. The first thermoplastic resin, which may form the second fibrous particles, may be, for example, polypropylene or polyester.

The melting point of the second thermoplastic resin, which may form the binders, does not have a single specific value due to the nature of the resin. Rather, the melting point of the second thermoplastic resin may be present over a range. A graph showing a amount of melt second thermoplastic resin while increasing a temperature in the melting point range may be a graph similar to a nearly normal distribution. In this connection, the graph has a peak as the maximum amount of the melt second thermoplastic resin. When the melting point corresponding to the peak is defined as a melting pointₘₐₓ, the second thermoplastic resin may be a low melting point PET fiber with a melting pointₘₐₓ in a range of about 150 to about 170°C.

The second thermoplastic resin, which may form the binders in the process of producing the porous fiber-reinforced composite as described below may be the sheath of the bicomponent fibers. The bicomponent fiber contains the sheath having the melting pointₘₐₓ in a range of about 150 to about 170°C which is lower compared to the melting point of the core. Thus, the forming process may be performed within the above defined temperature range. Thus, during the thermal formation, the process condition may be easily optimized and a thermal stability may be ensured at a high temperature.

Further, the second thermoplastic resin may have a melting point range being ± 20°C around the melting pointₘₐₓ. When applying the second thermoplastic resin having the melting point range as the sheath of the bicomponent fiber, the process control may be easy during the thermo forming and workability may be improved.

Further, the second thermoplastic resin, which may form the binders include a crystalline thermoplastic resin, this may further enhance the strength of the porous fiber-reinforced composite.

The crystalline thermoplastic resin, such as the low melting point PET fibers may have a specific elongation
For example, the second thermoplastic resin may be an elongated polyester-based fiber having an elongation in a range of from about 20% to about 80%.

Further, the strength of the crystalline thermoplastic resin is related to the elongation thereof. Increasing the elongation of the crystalline thermoplastic resin increases the strength thereof. Conversely, lowering the elongation of the crystalline thermoplastic resin will lower the strength of the crystalline thermoplastic resin.

The second thermoplastic resin, which may form the binders, may include at least one selected from a group consisting of polyester, polyethylene terephthalate, polypropylene, polyethylene (PE), and combinations thereof.

The binders serve to entangle the first fibrous particles and second fibrous particles with each other. The second thermoplastic resin forming the binders may have the above defined melting point range and thus may be melted at a low temperature, so that low temperature formability of the composite may be secured. The binders may be selected from low melting point polyesters, low melting point polyethylene terephthalates, low melting point polypropylenes, and low melting point polyethylene, depending on the forming temperature to be applied.

When the first thermoplastic resin and the second thermoplastic resin are selected as described above, the melting point of the first thermoplastic resin should be higher than the melting point of the second thermoplastic resin. Further, the first thermoplastic resin and the second thermoplastic resin may be selected so that the core and sheath materials of the bicomponent polymer fibers as used in the production method of the porous fiber-reinforced composite as described below satisfies the above defined condition.

Each of the second fibrous particles may have a cross-sectional diameter in a range of about 5 microns to about 50 microns. The second fibrous particles having the above defined diameter range may impart an appropriate strengthen to the composite while maintaining the orientation and dispersibility. The porous fiber-reinforced composite containing the second fibrous particles of the above defined diameter range may be resistant to external impacts. According to the production method of the porous fiber-reinforced composite to be described later, when the second fibrous particles having the above defined diameter range are dispersed in an aqueous solution to have the hydroentanglement property in the aqueous solution during the production, this may facilitate the production of the sheet made of the porous fiber-reinforced composite.

Each of the second fibrous particles may be in a range of about 1 mm to about 50 mm in length. The second fibrous particles with the length in the above range may appropriately impart strength to the composite while maintaining the orientation and dispersibility. Further, the second fibrous particles with the length in the above range may realize a proper bonding force between the fibrous particles to allow the porous fiber-reinforced composite to have an excellent strength. Further, the second fibrous particles with the length in the above range may prevent the aggregation of the fibers and thus the deterioration in the dispersibility. Otherwise, when the second fibrous particle are too long and entangled with each other to form a rope, this may result in the deterioration in the dispersibility. The second fibrous particles with the length in the above range may facilitate the production of the sheet made of the porous fiber-reinforced composite.

A porosity of the porous fiber-reinforced composite may be in a range of from about 40 to about 80% by volume. As described above, the porous fiber-reinforced composite forms a mesh structure having pores therein. The porous fiber-reinforced composite with the above porosity range may be lightweight while maintaining the strength thereof. Further, the composite may have excellent sound absorption performance.

A sound wave propagating through the pores of the porous fiber-reinforced composites may be attenuated by vibrations of the second fibrous particles. Thus, the composite may be applied as a sound absorption material. The higher the porosity of the porous fiber-reinforced composites, the higher the content of the second fibrous particles, and the longer the sound wave travels, thus, the better the energy attenuation. The length along which the sound wave travels may be larger when the thickness of the composite material itself is large, or when the pores communicate with each other well, though the porosities are the same between the composites. The porous fiber-reinforced composite may have improved sound absorption performance by controlling the content of the second fibrous particles and/or adjusting the length along which the sound wave travels, while maintaining a certain degree of the porosity. In particular, since the second fibrous particles are more flexible than the rigid first fibrous particles, the second fibrous particles may have high sound energy damping effect, thereby to effectively improve the sound absorption performance.

The porous fiber-reinforced composite may be produced into a plate having a density in a range of from about 0.2 g/cm³ to about 1.6 g/cm³.

The plate may be produced by compressing the porous fiber-reinforced composite to a certain compression level. For example, the plate may be obtained by stacking and process-forming several sheets made of the porous fiber-reinforced composite. In this connection, a single sheet made of the porous fiber-reinforced composite may be produced by a hydroentanglement process used in the process of producing the porous fiber-reinforced composite as described below.

The press-forming may be performed in a multi-stage process in which the heat treatment and pressing processes may be performed alternatively. Thus, the dispersibility of the binders may be further improved. For example, the stack of the porous fiber-reinforced composite sheets may be press-molded, then heated, and then press-molded at a room temperature, thereby to obtain a final plate. Performing the heat treatment processes and the press processes alternately may allow heat-transfer to the center of the plate, so that the binders may be melted well and thus the distribution thereof may be uniform. Uniformly dispersing the binders may allow the plate to have a very uniform property.

The press forming may be performed at a compression rate in a range of 80 to 95%. A compression density of the fibers may be controlled via the pressing forming to achieve excellent strength and sound absorption characteristics.

The plate may contain the pores therein. Generally, a composite produced via mixing raw materials and extruding and forming the mixture may not contain the pores therein. The plate may have the pores therein as the plate is produced using the porous fiber-reinforced composite.

Specifically, the plate may have a porosity in a range of from about 40 to about 80 % by volume. When the porous fiber-reinforced composite plate has the above defined porosity range, all of the strength, impact resistance and sound-absorbing properties of the porous fiber-reinforced composite plate may be excellent.

The porous fiber-reinforced composite plate may be produced by allowing the porous fiber-reinforced composite to be in a compressed state. Thus, an internal structure of the plate may be same as an internal structure of the porous fiber-reinforced composite of FIG. 1.

Specifically, the plate may be produced by performing the press forming such that the density of the plate is in a range of about 0.2 g/cm³ to about 1.6 g/cm³. When the plate has the above defined density, the plate may achieve excellent strength.

The porous fiber-reinforced composite plate produced as compressed as described above has excellent dispersibility of the fiber particles and thus may have excellent mechanical properties throughout the entire region of the plate. For example, when the plate is subjected to evaluation of the impact strength characteristics at various points thereof, the plate exhibits excellent impact strength results at the various points. Specifically, a falling ball impact test according to ASTM D3763 is applied onto the plate. In this connection, a difference between the maximum value and the minimum value of the impact strength as obtained in a single plate may be about 0.2 J/mm or smaller. In other words, the difference between the impact strengths as measured at any two points in the plate under the test according to ASTM D3763 may be smaller than or equal to about 0.2 J/mm.

The plate may achieve a light weight due to a low density while realizing the higher mechanical strengths such as tensile, flexural and impact strengths. Thus, the plate may be usefully applied to the automobiles and building materials requiring such properties. In addition, the plate may meet the sound absorption performance requirements to these automotive and building materials.

Further, since the plate contains a single polymer as a main component, the plate may be easily recycled without a separate separation process. Since glass fibers is not contained in the plate, workability of the plate may be good.

Further, the plate is produced in a compressed state as described above. Thereafter, the plate is not expanded even when the heat is applied thereto.

The porous fiber-reinforced composite plate may be produced according to the production method as described below. The plate may be produced from the porous fiber-reinforced composite in which the first fibrous particles and second fibrous particles are well-dispersed. Thus, the plate has an excellent dispersibility of the particles. Further, since all of the first fibrous particles and the second fibrous particles and binders employ a single resin, the compatibility therebetween increases and thus the bonding force therebetween increases. Thus, when the first fibrous particles and the second fibrous particles are well dispersed, and the binding forces between the first fibrous particles and the second fibrous particles and binders are increased, the strength of the porous fiber-reinforced composite plate may be improved.

The plate made of the porous fiber-reinforced composite may be produced based on the above-mentioned correlation between the dispersibility or compatibility and the strength. Thus, the plate exhibits excellent strength properties by improving the dispersibility and/or compatibility of the fibrous particles.

One approach to confirm that the dispersibility of the fibrous particles contained in the porous fiber-reinforced composite plate is improved may involve evaluating a cross-section of the porous fiber-reinforced composite using a color difference meter. The better the dispersibility of the fibrous particles, the smaller the aggregation, resulting in a broad white color. On the other hand, when the fibrous particles are dispersed poorly, the fibrous particles will aggregate and overlap with each other, resulting in a local dark color. This color difference may be evaluated using a colorimeter.

Another approach to confirm that the dispersibility of the fibrous particles contained in the porous fiber-reinforced composite plate is improved may include comparing strengths of the porous fiber-reinforced composites. As the dispersibility of the fibrous particles improves, this results in an improvement in the strength of the porous fiber-reinforced composite plate. Therefore, conditions such as contents and types of the binders, the first fibrous particles, the second fibrous particles contained in the porous fiber-reinforced composite are constant while only the dispersibility of the first fibrous particles and the second fibrous particles may vary between various production examples of the composite plates. Then, the strengths of various composite plates as produced by the various production examples may be compared to each other.

The porous fiber-reinforced composite plate may be produced from the porous fiber-reinforced composite as produced via achievement of an unidirectional orientation of the fibrous particles as described above. The porous fiber-reinforced composite plate may be produced as follows: the first fibrous particles and the second fibrous particles are bound to each other via the binders to form a composite sheet having an irregular mesh structure containing the pores therein; then, several composite sheets are subjected to the press forming. In this connection, the fibrous particles in the composite sheet have the unidirectional orientation. Thus, the composite sheet has high mechanical properties along the direction of the orientation. Therefore, the porous fiber-reinforced composite plate as obtained by stacking the composite sheets in one direction and then press-forming the stack may withstand a large force in a specific direction.

The plate made of the porous fiber-reinforced composite may be produced to have a weight suitable for the intended application thereof. In one example, the plate may have a basis weight in a range of from about 600 g/m² to about 3000 g/m², for example, from about 900 g/m² to about 1400 g/m² (quartz).

The composite porous fiber-reinforced composite plate may have a thickness in a range of about 2 mm to about 8 mm.

The porous fiber-reinforced composite may be lightweight as described above. Specifically, the density thereof may be in a range from about 0.2 g/cm³ to about 1.6 g/cm³.

The porous fiber-reinforced composite may be produced into a form or shape suitable for the intended application thereof. In one example, the composite may be produced into a sheet via the hydroentanglement process.

The sheet made of the porous fiber-reinforced composite may be produced to have a weight suitable for the intended application thereof. In one example, the sheet may have a weight in a range of from about 50 g/m² to about 1200 g/m².

The porous fiber-reinforced composite may be produced by a production method of a porous fiber-reinforced composite, the method including:
dispersing reinforcing fibers and bicomponent polymer fibers in an aqueous acid solution to prepare a slurry solution;
applying a hydroentanglement process to the slurry solution to form a web from the slurry solution; and
heat-treating and drying the formed web.

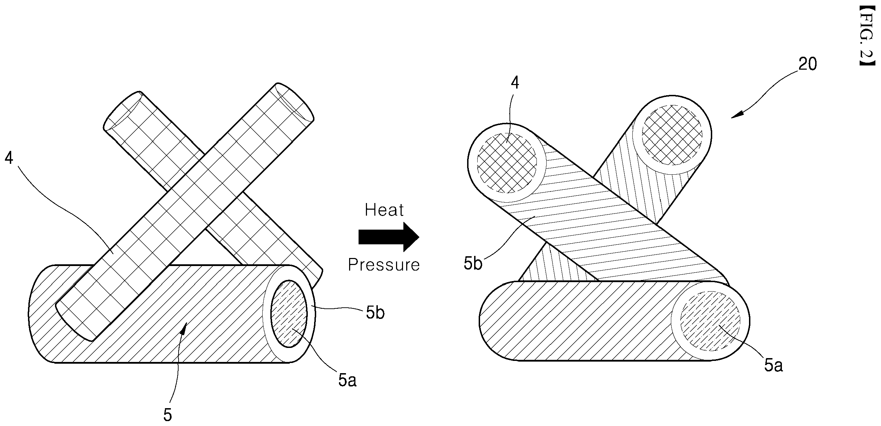

FIG. 2 illustrates a production of the porous fiber-reinforced composite 20 via applying heat and pressure to reinforcing fibers 4 and bicomponent polymer fibers 5 in accordance with a production method of the porous fiber-reinforced composite.

The reinforcing fibers 4 may include the first fibrous particles as described above. Thus, details of the reinforcing fibers 4 are as described above with reference to the first fibrous particles. The reinforcing fibers 4 may include inorganic fibers or organic fibers, as described above.

The bicomponent polymer fibers 5 may contain a core 5a and a sheath 5b. The core 5a includes the first thermoplastic resin, while the sheath includes the second thermoplastic resin 5b.

The melting point of the first thermoplastic resin is higher than the melting point of the second thermoplastic resin.

Details of the first thermoplastic resin and the second thermoplastic resin are as described above.

In the heat treatment and drying phase, the second thermoplastic resin forming the sheath is melted such that the reinforcing fibers and the bicomponent polymer fibers are bound to each other via thermal fusion, thereby to form an irregular mesh structure containing the pores therein.

The second thermoplastic resin forming the sheath is coated with the core and then is melted in the heat treatment and drying step. Thus, the second thermoplastic resin is moved onto the reinforcing fibers and thus partially or fully coat a surface of each of the reinforcing fibers. As the molten second thermoplastic resin solidifies, the second thermoplastic resin acts as the binders for binding the reinforcing fibers and the core of the bicomponent fiber to each other.

Thus, since the sheath acts as the binder, the production of the porous fiber-reinforced composite may not require separate binders.

The thermoplastic resin that forms the sheath of the bicomponent polymer fiber has a relatively low melting point. This may be advantageous in that the low temperature forming may be realized.

The porosity of the porous fiber-reinforced composite and the coating amount of the sheath on the reinforcing fibers may be controlled via varying the contents of the core and sheath of the bicomponent polymer fibers.

In one example, the bicomponent polymer fiber may be configured such that the sheath may have a content in a range of from about 40 parts by weight to about 250 parts by weight relative to 100 parts by weight of the core.

Although the porous fiber-reinforced composite is produced by dispersing the bicomponent polymer fibers made of chemically hydrophobic thermoplastic resin into an aqueous acid solution, the dispersibility may be improved by configuring the bicomponent polymer fibers to be composed of the core and sheath and by increasing the specific gravity of the core. When, as described above, the specific gravity of the core of the bicomponent polymer fibers is larger than 1, the dispersibility may be improved during stirring the particles in the aqueous acid solution.

In order to improve the dispersibility of the reinforcing fibers and the bicomponent polymer fibers in the aqueous acid solution, the sheath and reinforcing fibers may be subjected to the surface-treatment. As a result, the porous fiber-reinforced composite plate with better dispersibility may be produced.

The surface treatment of the reinforcing fibers and the sheath of the bicomponent polymer fibers may be performed by introducing a functional group such as a fluoro group, a hydroxyl group, a carboxyl group or an alkyl group on the surfaces thereof or by coating the functional group onto the surface using a coating agent. In one example, when the reinforcing fibers and bicomponent fiber polymer fibers are produced, the dipping process or the like may be employed such that the surfaces of the reinforcing fibers or the surfaces of the sheath of the bicomponent polymer fibers may be chemically reacted with the surface treatment agent to enable the functional groups to bind onto the surfaces.

Specifically, the surfaces of the reinforcing fibers or bicomponent polymer fibers may be subjected to silane-treatment via the surface treatment or coating agent which may be used in the production of the reinforcing fibers and the bicomponent polymer fibers. Thus, this may enhance the bonding strength between the fibers. Alternatively, the surface of the reinforcing fibers or bicomponent polymer fibers may be subjected to carbonization to improve the heat resistance. Alternatively, the surface of the reinforcing fibers or bicomponent polymer fibers may be subjected to hydrolysis to improve the hydrophilicity. Alternatively, the surface of the reinforcing fibers or bicomponent polymer fibers may be subjected to oxidation to improve in-water dispersibility.

The surface treatment agent may be, for example, a fluorine-based wax (for example, PFAO), a hydrocarbon-based wax, or a silicone-based polymer.

The coating agent may impart properties such as hydrophilicity/hydrophobicity, water repellency, flame retardancy, nonflammability, heat resistance, acid resistance, alkali resistance, durability and stain resistance, depending on components thereof. Specifically, a water repellent such as a fluorine-based wax (for example, PFAO), a hydrocarbon-based wax, and a silicone-based polymer compatibilizer may be used as the coating agent.

The weight ratio between the reinforcing fibers and the bicomponent polymer fibers may be adjusted depending on the desired properties of the porous fiber-reinforced composite to be produced.

In one example, the weight ratio between the reinforcing fibers and the bicomponent polymer fibers may be in a range from about 20:80 to about 80:20, specifically about 40:60 to about 60:40.

Specifically, in the production process of the porous fiber-reinforced composite, a total content of the reinforcing fibers and the bicomponent polymer fibers may be contained at in a range of about 0.1 g to about 10 g based on 1 L of the acid aqueous solution. Controlling the total amount of the reinforcing fibers and the bicomponent polymer fibers in the above defined content range may allow maintaining excellent dispersibility to form a uniform thickness sheet. Thus, physical properties due to the excellent dispersibility may be secured.

The pH of the aqueous acid solution may be in a range from about 1 to about 4. Adjusting the pH of the acid solution within the above defined range may allow charges to occur on the surface of the glass fiber to further improve the dispersibility while preventing the silica glass (SiO₂), alumina (Al₂O₃), and boron (B₂O₅) constituting the glass fiber from being chemically decomposed by a strong acid.

The production method of the porous fiber-reinforced composite may further include agitating the slurry solution. The dispersibility may be further improved by further performing the step of stirring the slurry solution.

In the production process of the porous fiber-reinforced composite, the step of heat-treating and drying the formed web may be carried out at a temperature in a range being ±30°C around the melting temperature. The above defined temperature range is determined based on a temperature at which the sheath of the bicomponent fibers begins to soften or melt. When the temperature is lower than the above defined range, moisture-drying may be difficult. Further, the bicomponent polymer fibers (sheath) do not soften sufficiently. Thus, the moisture may remain after drying the sheet or the sheet shape may not be fixed. Conversely, when the temperature is higher than the above defined range, the sheath of the bicomponent polymer fibers is completely melted and thus is not uniformly transferred onto the reinforcing fibers. Furthermore, there is a possibility that the sheath polymer degradation in the bicomponent polymer fibers may occur above the melting temperature.

The core of the bicomponent polymer fibers may not be melted but may be contained in the porous fiber-reinforced composite by controlling appropriately a cross section diameter of the core of the bicomponent polymer fibers and by heat-treating and drying the resulting product at the appropriate heat treatment temperature.

During the hydroentanglement process, the fibers are evenly mixed in the aqueous solution, and then the mixture moves together along a mesh moving along a conveyor belt to forming a hydro-entangled web. In this connection, the produced composite sheet has an orientation by imparting a slope to a path along which the fibers rises up. Then, laminating the thus-oriented composite sheets may lead to the production of the porous fiber-reinforced composite plate having the orientation of the fibrous particles. Thus, the porous fiber-reinforced composite plate may have the improved strength in the direction of the orientation.

Thus, the porous fiber-reinforced composite plate may be produced so as to have an orientation selected in accordance with the intended application thereof.

In one example, when the fibers are conveyed from a headbox to the conveyor belt to form the composite sheet, an inclined web formation may be performed, that is, a path where the composite sheet is formed may be inclined. In this connection, the fibers may be oriented into a machine direction (MD) direction rather than in a planar conveyor belt direction. The orientation may be classified into the machine direction (MD) direction and the cross direction (CD). In this connection, configuring the orientation into the MD direction may be easier than configuring the orientation into the CD direction.

The slurry solution may further contain additives such as cross-linking agents, or additional binders.

The crosslinking agent acts to strengthen the chemical bonding between the reinforcing fibers and bicomponent polymer fibers. For example, a silane compound, a maleic acid compound, or the like may be used as the crosslinking agent.

A content of the crosslinking agent may be in a range of 0 to 5 parts by weight relative to 100 parts by weight of the total fibers (sum of the reinforcing fibers and bicomponent polymer fibers).

The additional binder may include a water soluble polymer such as starch, casein, polyvinyl alcohol (PVA), carboxymethylcellulose (CMC); emulsions such as polyethylene, polypropylene and polyamide; or inorganic compounds such as cement, calcium sulfate-based clay, sodium silicate, alumina silicate, and calcium silicate.

A content of the additional binder may be in a range of from about 0 to about 5 parts by weight relative to 100 parts by weight of the total fibers (sum of the reinforcing fibers and bicomponent polymer fibers).

The plate made of the porous single resin-based fiber reinforced composite may be formed by compressing at least two composite sheets. Specifically, how many sheets are to be stacked may be determined according to the desired weight per unit area of the final product. In one example, when the final composite product has a weight per unit area of 1200 g/m², approximately two to twelve sheets may be laminated to form a stack and then heat and pressure may be applied to the stack to produce a plate made of the porous single resin-based fiber reinforced composite having the target weight.

The hot press forming may be performed at a temperature where the sheath of the bicomponent fiber may melt and the core may not melt. Performing the hot press forming in this temperature range may cause the sheaths to melt to allow interfaces of the composite sheets to be fused and bound to each other.

Specifically, the hot press forming may be performed by applying the pressure of about 1 to about 30 bar at a temperature of about 100 to about 180 degrees C to laminate and form the composite sheets. Thus, the plate made of the porous single resin fiber reinforced composite may be produced.

The hot press forming may also be carried out so that the porous single resin fiber reinforced composite plates may be continuously produced using a double belt press forming.

According to another implementation, a plate made of the porous single resin fiber reinforced composite may be produced as follows: First, after mixing the reinforcing fibers and bicomponent polymer fibers, the blended fibers may be stirred in an aqueous solution containing the additive, and then transferred to a head box to form a web. While the slurry in the headbox passes through a vacuum intake system, a wet web may be formed. The wet web passes through a dryer. Thus, a composite sheet may be produced. A weight of the composite sheet is in a range from about 50 grams per square meter to about 600 grams per square meter to facilitate a subsequent thermoforming process. The drying temperature may be set to a range of about 100°C to about 180°C, depending on the sheath material, so that the sheath of the bicomponent polymer fibers may act as a binder. The produced composite sheet may be cut and laminated on top of another according to the intended use thereof. Thus, the stack of the sheets may be subjected to the thermo compression press process, to produce a plate made of a porous single resin fiber reinforced composite of about 2 mm to about 8 mm in thickness.

In one example, the plate of the porous single resin composite may be heated at about 200°C, and then may be transferred to a press machine at a room temperature and then press-formed thereon to produce a new plate of 2 to 4 mm in thickness.

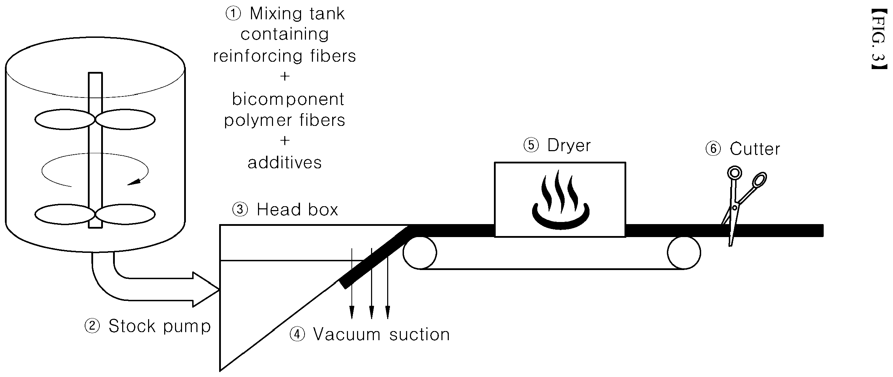

FIG. 3 is a schematic representation of the production of the porous single-resin fiber reinforced composite as described above with reference to one implementation.

Hereinafter, the Present Example and the Comparative Example of the present disclosure are described. Such a Present Example is only one Present Example of the present disclosure and thus the present disclosure is not limited to the Present Example.

### (Present Example)

### Present Example 1

The bicomponent polymer fibers were prepared. Each of the bicomponent polymer fibers was composed of a polyester core and a low melting point crystalline polyester sheath (melting pointₘₐₓ = 160°C, and a melting point ranging from 140 to 180°C). A weight ratio between the core and sheath was 50:50. Each of the bicomponent polymer fibers had a length of 5 mm and a diameter of 4 deniers (about 20 µm in a cross-sectional diameter). The glass fibers as the reinforcing fibers were prepared. Each of the glass fibers was cut to have a length of 13 mm and had a cross-sectional diameter of 13 µm. This dimension was suitable for dispersion of the fibers in an aqueous solution. 40 parts by weight of the glass fibers and 60 parts by weight of the bicomponent polymer fibers were mixed with each other. Then, the mixture was input into an aqueous solution of pH 2 as adjusted using hydrochloric acid and was stirred for 1 hour therein. In this connection, the total fiber content of the glass fibers and bicomponent polymer fibers was 2 g per 1 L of water. A hydroentanglement process was performed on the aqueous solution slurry to form the web. That is, the aqueous solution slurry was received in a vacuum suction device in the head box. After forming the web, the water was completely dried from the wet web using an oven dryer at 140° C to form a composite sheet. The dried sheet made of a porous fiber-reinforced composite had a weight per unit area of 120 g/m², and was approximately 5 mm thick. Ten sheets were laminated so that the stack had 1200 g/m². The stack was subjected to a hot press at 170 degrees C to form a 2.5 mm thick plate. The plate thus produced was swollen via preheating in an IR oven at 200 degrees C for 2 minutes, and then transferred to a press at a room temperature and then subjected to a pressure. At this time, the applied pressure was 100 ton/m², which is a pressure enough to prevent the plate from escaping from a mold.

### Comparative Example 1

A porous fiber-reinforced composite was produced in the same manner as in Present Example 1, except that bicomponent polymer fibers used in Present Example 1 were replaced with polypropylene fibers, each having a length of 5 mm and a diameter of 4 deniers (about 20 µm in a cross-sectional diameter). Then, a plate was formed in the same manner as in Present Example 1, and then was expanded via preheating at 200° C for 2 minutes in an IR oven. After transferring the plate to a press at a room temperature, a pressure was applied to the plate to complete a final plate.

### Comparative Example 2

A different bicomponent polymer fiber from that in Present Example 1 was used. That is, each of the bicomponent polymer fibers in Comparative Example 2 was composed of a polyester core and a low melting point non-crystalline polyester sheath (melting pointₘₐₓ = 110°C, and a melting point ranging from 70 to 150°C). A weight ratio between the core and sheath was 50:50. Each of the bicomponent polymer fibers had a length of 5 mm and a diameter of 4 deniers (about 20 µm in a cross-sectional diameter). Then, a porous fiber-reinforced composite was produced in the same manner as in Present Example 1. Then, a plate was formed in the same manner as in Present Example 1, and then was expanded via preheating at 200° C for 2 minutes in an IR oven. After transferring the plate to a press at a room temperature, a pressure was applied to the plate to complete a final plate.

### Evaluation

### Experimental Example 1

Mechanical properties of the plates as produced in Present Example 1 and Comparative Examples 1 and 2 were compared with one another. First, after leaving the plates as produced in Present Example 1 and Comparative Examples 1 and 2 at a room temperature for 24 hours, respectively, the tensile strength, flexural strength and flexural modulus thereof were measured. The tensile strength was measured using a 2 mm thick sample according to ASTM D638. The flexural strength and flexural modulus were measured using a 2.5 mm thick sample according to ASTM D790.

Likewise, after leaving the plates as produced in Present Example 1 and Comparative Examples 1 and 2 at a room temperature for 24 hours, respectively, an impact strength thereof was measured under a falling ball impact test as carried out at a room temperature according to ASTM D3763.

Further, after leaving the plates as produced in Present Example 1 and Comparative Examples 1 and 2 at a 80 degrees C temperature for 2 hours, respectively, a variation in thickness thereof was measured.

The results are shown in Table 1.

**[Table 1]**

| Examples | Tensile strength (MPa) | Flexural strength (MPa) | Flexural modulus (GPa) | Impact energy (IZOD) (J/m) | Thickness variation (%) |
|---|---|---|---|---|---|
| Present Example 1 | 62 | 26 | 2.1 | 4.4 | 0 |
| Comparative Example 1 | 42 | 21 | 1.8 | 2.7 | 0 |
| Comparative Example 2 | 37 | 23 | 1.9 | 1.9 | 20 |

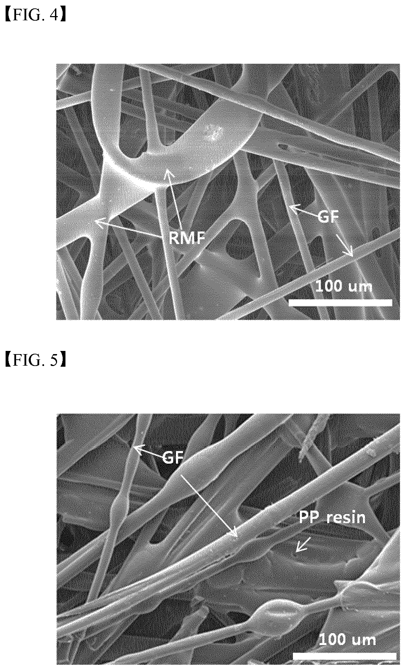

In Present Example 1, the composition and dimension of the reinforcing fibers are the same as those in Comparative Example 1. However, a structure of the palate after heat-forming in Present Example 1 is different from that in Comparative Example 1. FIG. 4 shows a SEM image of a cut surface of the plate as produced in Present Example 1. FIG. 5 is a SEM photograph of a cut surface of the plate as produced in Comparative Example 1. In FIG. 4, a portion marked as 'RMF' shows that the low melting point crystalline polyester sheath of the bicomponent polymer fibers is partially melted. The remaining portion retains in the fibrous phase. A portion indicated as 'GF' represents the glass fiber. In FIG. 5, a portion labeled as 'PP resin' indicates that the polypropylene fibers were in a molten state. A portion indicated as 'GF' represents the glass fiber. Present Example 1 shows that not only the fiber glass but also the polyester fibrous remains in the porous fiber-reinforced composite after heat-forming. However, In Comparative Example 1, the fibrous phase of the polypropylene fibers disappears due to the melting thereof. Only the glass fibers remain in a fibrous form. As a result, Present Example 1 which contains the bicomponent polymer fibers remaining in the fibrous form shows a high tensile strength value.

In comparison between Present Example 1 and Comparative Example 2, Present Example 1 using the bicomponent polymer fibers having the sheath made of the crystallized sheath showed no change in a thickness after the plate was left at 80°C for 2 hours. This confirmed that the stability thereof is improved. In Comparative Example 2, the thickness of the plate increased by 20% after the plate was left at 80°C for 2 hours. Further, Present Example 1 using bicomponent polymer fibers having the sheath made of crystallized PET has superior strength compared with Comparative Example 2.

Although the preferred embodiments of the present disclosure have been described in detail above, a scope of the present disclosure is not limited thereto. Various variations and modifications of the preferred embodiments of the present disclosure by the person skilled in the art using the basic concept of the present disclosure as defined in the following claims are included in the scope of the present disclosure.

### Reference Numerals

1: First fibrous particles
2: Second fibrous particles
3: Binders
4: Reinforcing fibers
5: Bicomponent polymer fibers
5a: Core
5b: Sheath
10, 20: Porous fiber-reinforced composite

## Claims

1. A porous fiber-reinforced composite comprising:
first fibrous particles;
second fibrous particles; and
binders for binding the first fibrous particles and the second fibrous particles to each other,
wherein the first fibrous particles and the second fibrous particles bind to each other via the binders to form an irregular mesh structure containing pores therein,
wherein the first fibrous particles include inorganic or organic fibers,
wherein the second fibrous particles include a first thermoplastic resin,
wherein the binders includes a second thermoplastic resin,
wherein a melting point of the first thermoplastic resin is higher than a melting point of the second thermoplastic resin,
wherein the second thermoplastic resin includes a crystalline thermoplastic resin.

2. The porous fiber-reinforced composite of claim 1, wherein the binder is partially or entirely coated on a surface of each of the first fibrous particles and the second fibrous particles to form coating, wherein the coatings formed on the surfaces of the first fibrous particles and the second fibrous particles are fused and bound to each other.

3. The porous fiber-reinforced composite of claim 1, wherein when a melting point of the second thermoplastic resin at which the second thermoplastic resin is melt at a maximum level is defined as a melting pointₘₐₓ, the second thermoplastic resin includes a low melting point PET fiber with a melting pointₘₐₓ in a range of about 150 to about 170°C.

4. The porous fiber-reinforced composite of claim 3, wherein the second thermoplastic resin has a melting point range within ± 20°C around the melting pointₘₐₓ.

5. The porous fiber-reinforced composite of claim 1, wherein the second thermoplastic resin includes an elongated polyester fiber having an elongation in a range of 20% to 80%.

6. The porous fiber-reinforced composite of claim 1, wherein a ratio between a weight of the first fibrous particles and a weight of a sum of the second fibrous particles and the binders is in a range of 20:80 to 80:20.

7. The porous fiber-reinforced composite of claim 1, wherein a content of the second fibrous particles is in a range of from 40 parts by weight to 250 parts by weight relative to 100 parts by weight of the binders.

8. The porous fiber-reinforced composite of claim 1, wherein each of the first fibrous particles includes at least one selected from a group consisting of glass fibers, aramid fibers, carbon fibers, carbon nanotubes, boron fibers, metal fibers, and combinations thereof.

9. The porous fiber-reinforced composite of claim 1, wherein each of the first fibrous particles has a cross-sectional diameter ranging from 5 to 40 µm.

10. The porous fiber-reinforced composite of claim 1, wherein each of the first fibrous particles has a length in a range of 1 mm to 50 mm.

11. The porous fiber-reinforced composite of claim 1, wherein the first thermoplastic resin includes at least one selected from a group consisting of polyester, polypropylene (PP), polyethylene (PE), acrylic butadiene styrene (ABS), polycarbonate (PC), nylon, polyvinyl chloride (PVC), polystyrene (PS), polyurethane (PU), polymethylmethacrylate (PMMA), polylactic acid (PLA), Teflon (polytetrafluoroethylene), and combinations thereof.

12. The porous fiber-reinforced composite of claim 1, wherein the second thermoplastic resin includes at least one selected from a group consisting of polyester, polyethylene terephthalate, polypropylene, polyethylene (PE) and combinations thereof.

13. The porous fiber-reinforced composite of claim 1, wherein a melting point of the first thermoplastic resin is greater than or equal to 160°C.

14. The porous fiber-reinforced composite of claim 1, wherein the first thermoplastic resin has a specific gravity greater than 1.

15. The porous fiber-reinforced composite of claim 1, wherein each of the second fibrous particles have a cross-sectional diameter ranging from 5 to 30 µm.

16. The porous fiber-reinforced composite of claim 1, wherein each of the second fibrous particles has a length in a range of 1 mm to 50 mm.

17. The porous fiber-reinforced composite of claim 1, wherein the porous fiber-reinforced composite is formed into a plate with a density in a range of 0.2 g/cm³ to 1.6 g/cm³.

18. The porous fiber-reinforced composite of claim 17, wherein the plate has a porosity in a range of 40 to 80% by volume.

19. The porous fiber-reinforced composite of claim 17, wherein the plate has a basis weight in a range of 600 g/m² to 3000 g/m².

20. The porous fiber-reinforced composite of claim 17, wherein the plate has a thickness in a range of 5 mm to 8 mm.
